# EUROPÄISCHE PATENTSCHRIFT

(11) **EP 2 558 360 B1**
(45) Veröffentlichungstag und Bekanntmachung des Hinweises auf die Patenterteilung: **06.04.2016**
(21) Anmeldenummer: 11718921.7
(22) Anmeldetag: 09.04.2011
(51) Int. Cl.: B64C 1/06

(54) **LUFTFAHRZEUGRUMPF MIT EINER INTEGRIERTEN ENERGIEAUFNEHMENDEN VERFORMUNGSSTRUKTUR UND LUFTFAHRZEUG MIT EINEM DERARTIGEN RUMPF**
AIRCRAFT WITH AN INTEGRATED ENERGY-ABSORBING DEFORMATION STRUCTURE AND AIRCRAFT WITH SUCH A FUSELAGE
AÉRONEF À STRUCTURE INTÉGRÉE DE DÉFORMATION ABSORBANT L'ÉNERGIE ET AÉRONEF MUNI D'UN TEL FUSELAGE

(30) Priorität: 12.04.2010 DE 102010014638
(43) Veröffentlichungstag der Anmeldung: 20.02.2013
(73) Patentinhaber: Airbus Defence and Space GmbH, 85521 Ottobrunn (DE)
(72) Erfinder: MAYER, Franziskus, 82362 Weilheim (DE); MEISNER, Christoph, 26188 Edewecht (DE); STARKE, Peter, 85521 Ottobrunn (DE)
(74) Vertreter: Häußler, Henrik
(86) Internationale Anmeldenummer: PCT/DE2011/000383
(87) Internationale Veröffentlichungsnummer: WO 2011/127899

(56) Entgegenhaltungen:
- WO-A1-02/46036
- WO-A1-2006/051235

## Beschreibung

### TECHNISCHES GEBIET

Die vorliegende Erfindung betrifft einen Luftfahrzeugrumpf mit einer integrierten energieaufnehmenden Verformungsstruktur gemäß dem Oberbegriff des Patentanspruchs 1. Die Erfindung betrifft weiterhin ein Luftfahrzeug, das mit einem derartigen Rumpf ausgestattet ist.

Es ist hinlänglich bekannt, Luftfahrzeuge im unteren Bereich mit sogenannten Crashboxen zu versehen, die im Fall einer Notlandung die kinetische Energie des auf den Untergrund aufschlagenden Luftfahrzeugs in Verformungsarbeit umwandeln.

### STAND DER TECHNIK

Aus der DE 601 14 455 T2 ist es bekannt, den ringförmigen Rumpfspant im unteren Rumpfbereich abzuflachen und unterhalb dieses abgeflachten horizontalen Spantabschnitts in Längsrichtung verlaufende Träger vorzusehen, die als energieaufnehmende Verbundträger ausgestaltet sind. Diese Verbundträger sind mittels Befestigungsbeschlägen an den horizontalen Spanten angebracht. Diese Befestigungsbeschläge erhöhen das Gesamtgewicht des Luftfahrzeugs nicht unerheblich und erhöhen, wenn sie zur Gewichtseinsparung beispielsweise aus Titan gefertigt werden, die Herstellungskosten des Luftfahrzeugs deutlich. Des Weiteren sind die Spanten in diesem Bereich nur über die verformbaren Längsträger mit der Rumpfhaut verbunden, so dass dann, wenn bei einem vertikalen Aufschlag des Luftfahrzeugs eine Querkraftkomponente hinzukommt, zu erwarten ist, dass die verformbaren Längsträger seitlich wegknicken.

Aus der DE 44 16 506 A1 ist ein Luftfahrzeugrumpf bekannt, der in seinem unteren Bereich mit einer unteren Fußbodenstruktur versehen ist, die mittels Stützelementen abgestützt ist, die sich zwischen der unteren Fußbodenstruktur und den Rumpfspanten schräg zur vertikalen Längsmittelebene des Luftfahrzeugs erstrecken. Unterhalb der unteren Fußbodenstruktur ist eine Verformungsstruktur außen am Rumpf vorgesehen, die den aerodynamisch wirksamen Querschnitt des Luftfahrzeugs deutlich vergrößert.

Sind im untersten Rumpfbereich Träger zwischen einem unteren Fußboden und den Spanten vorgesehen, die Teil einer energieaufnehmenden Verformungsstruktur sind, dann können diese Träger zwar bei einem Aufschlag auf einen festen Untergrund kinetische Energie in Verformungsenergie umwandeln, wobei aber die Gefahr besteht, dass im Bereich der Anbringung dieser Träger an den Rumpfspanten Scherkräfte auftreten, die bei einem Aufschlag zu einem Einreißen der Rumpfhaut oder gar des Spantes in diesem Bereich führen können. Im Falle einer Notwasserung kann dann unerwünscht Wasser in den Rumpf eindringen.

Ein vom Erfinder der vorliegenden Anmeldung entwickeltes impulsabsorbierendes Strukturbauteil ist aus der DE 10 2007 038 634 B3 vorbekannt. Dieses Strukturbauteil besteht aus einer impulsabsorbierenden Schicht, auf der eine Deckschicht angebracht ist. Die impulsabsorbierende Schicht weist ein regelmäßiges Muster von Erhebungen und Vertiefungen auf, so dass sich beim Auftreffen eines Masseteils auf die Deckschicht in der impulsabsorbierenden Schicht ein Fangsack ausbildet, mit welchem die kinetische Energie des Masseteils abgebaut wird.

Die WO 2002/46036A1 beschreibt und zeigt einen Luftfahrzeugrumpf, der ringförmige Spanten und die Spanten miteinander verbindender Rumpflängsträger sowie eine eine Rumpfhaut bildende Beplankung aufweist. Die Spanten dieses vorbekannten Luftfahrzeugrumpfs sind im unteren Teil des Rumpfes nicht mit den dort vorgesehenen Rumpflängsträgern verbunden, folgen also nicht dem Verlauf des Rumpfhaut, sondern sind im unteren Teil des Rumpfes horizontal ausgebildet und in diesem Bereich von der Rumpfhaut beabstandet. Unterhalb dieses horizontalen Abschnitts der jeweiligen Spanten ist eine integrierte energieaufnehmende Verformungsstruktur vorgesehen, die jeweils einen linksseitigen und einen rechtsseitigen plastisch verformbaren Bereich und einen zwischen diesen beiden plastisch verformbaren Bereichen gelegenen mittleren plastisch verformbaren Bereich aufweist. Der rechte und der linke plastisch verformbare Bereich ist aufgrund der dargestellten Bauweise in vertikaler Richtung von größerer Steifigkeit als der mittlere Bereich. Oberhalb des horizontalen Abschnitts der Spanten ist eine Gerüststruktur gezeigt.

Die WO 2006/051235 A1 beschreibt und zeigt einen Rumpfquerschnitt eines Luftfahrzeugrumpfs, bei welchem der Rumpf ringförmige Spanten aufweist, die einen im unteren Bereich des Rumpfquerschnitts verlaufenden Querträger aufweisen. Auf diesem Querträger ist eine Fußbodenstruktur vorgesehen, die ihrerseits eine Mehrzahl von Fußbodenlängsträgern aufweist, die auf dem Rumpfquerträger angeordnet sind und auf denen Fußbodenquerträger angeordnet sind, die ihrerseits aber nicht unmittelbar mit den Spanten verbunden sind. Der untere Teil der jeweiligen Spanten sowie der jeweilige Spantenquerträger sind mit zick-zack-förmigen Streben untereinander verbunden.

### DARSTELLUNG DER ERFINDUNG

Aufgabe der vorliegenden Erfindung ist es, einen Luftfahrzeugrumpf mit einer integrierten energieaufnehmenden Verformungsstruktur anzugeben, der bei einem Bodenaufschlag des Luftfahrzeugs eine wirksame Aufschlagsdämpfung ermöglicht und dessen Verformungsstruktur bei einer Notwasserung des Luftfahrzeugs das Auftreten von Rissen in der Luftfahrzeugaußenhaut weitgehend verhindert. Eine weitere Aufgabe ist es, ein Luftfahrzeug mit einem derartigen Rumpf anzugeben.

Die auf den Luftfahrzeugrumpf gerichtete Aufgabe wird durch die im Patentanspruch 1 angegebenen Merkmale gelöst.

Der Rumpf weist ringförmige Spanten und die Spanten miteinander verbindende Rumpflängsträger sowie eine Beplankung auf, die eine Rumpfhaut bildet. Im Inneren des Rumpfes ist zumindest eine untere Fußbodenstruktur vorgesehen, die eine Mehrzahl von mit einem zugeordneten Spant verbundenen Querträgern sowie diese Querträger miteinander verbindende Fußbodenlängsträger aufweist. Die Verformungsstruktur ist in einem unterhalb der unteren Fußbodenstruktur gelegenen unteren Rumpfbereich ausgebildet. Erfindungsgemäß weist die Verformungsstruktur einen ersten inelastisch verformbaren mittleren Bereich und jeweils einen zweiten, linksseitigen beziehungsweise rechtsseitigen inelastisch verformbaren Bereich von größerer Steifigkeit in vertikaler Richtung, also in Richtung der Luftfahrzeughochachse, als der mittlere Bereich auf. Zwischen dem linken inneren und dem rechten inneren nach unten verlängerten Fußbodenlängsträger ist, einem jeden Spant zugeordnet, jeweils eine in Luftfahrzeugquerrichtung verlaufende Stützstruktur vorgesehen, die die jeweiligen unteren, mit dem zugeordneten Spant verbundenen Bereiche der inneren, nach unten verlängerten Fußbodenlängsträger zur Kraftübertragung in Querrichtung miteinander verbindet.

Die Stützstruktur leitet gemeinsam mit den Querträgern der unteren Fußbodenstruktur die Querkräfte zwischen den beiden unteren Abschnitten des Spantes links und rechts der vertikalen Längsmittelebene des Luftfahrzeugs. Dadurch ist der untere Teil des jeweiligen Spants im Bereich des ersten inelastisch verformbaren mittleren Bereichs zum größten Teil von der Kraftübertragung ausgenommen, so dass eine Verformung dieses Bereichs nicht zum Zusammenbrechen des von den Spanten und Längsträgern gebildeten statischen Systems des Rumpfes führt.

Die bei einem Crash, zum Beispiel einer Bruchlandung oder einer Notwasserung, in den beiden verformbaren Bereichen stattfindenden Verformungen sind irreversibel. Ist die Verformungsstruktur aus Metall gebildet oder weist sie verformbare Metallteile auf, so werden die Metallteile plastisch verformt. Ist die Verformungsstruktur jedoch aus Faserverbundwerkstoff, zum Beispiel Kohlefaserverbundwerkstoff (CFK) oder Glasfaserverbundwerkstoff (GFK), gebildet oder weist sie verformbare Teile aus Faserverbundwerkstoff auf, so unterliegen diese Teile aus Faserverbundwerkstoff bei einem Crash einem Bröselbruch ("crushing").

### VORTEILE

Bei einer Notlandung oder Notwasserung wird zunächst der erste, mittlere verformbare Bereich eingedrückt, bevor sich das Luftfahrzeug auf den beiden links und rechts davon (bezüglich der vertikalen Längsmittelebene des Luftfahrzeugs) gelegenen zweiten inelastisch verformbaren Bereichen abstützt.

Im Falle einer Notlandung auf festem Untergrund rutscht das Luftfahrzeug dann auf den zweiten, seitlich gelegenen inelastisch verformbaren Bereichen, die durch Reibungsenergie allmählich abgetragen werden oder bei einem stärkeren Vertikalaufschlag ebenfalls inelastisch verformt werden, um weitere kinetische Energie abzubauen.

Im Falle einer Notwasserung wird ebenfalls zunächst der erste mittlere verformbare Bereich der Verformungsstruktur nach innen eingedrückt. Da in diesem Bereich keine die Rumpfspanten nach oben starr abstützenden Träger vorgesehen sind, kann die Eindrückung im Wesentlichen hindernisfrei erfolgen, so dass die Gefahr des Einreißens der Rumpfhaut gering ist. Der Rumpf bleibt daher bei einer Notwasserung in diesem Bereich dicht, zumindest jedoch ist das Eindringen von Wasser in den Rumpf in diesem Bereich erschwert.

Nach dem Eindrücken des ersten mittleren Bereichs der Verformungsstruktur bilden die beiden seitlichen zweiten inelastisch verformbaren Bereiche eine kufenartige Struktur aus, die ähnlich wie die beiden Rümpfe eines Katamarans wirkt und das Luftfahrzeug bei seiner Vorwärtsbewegung auf dem Wasser stabilisiert.

Weitere bevorzugte und vorteilhafte Ausgestaltungsmerkmale des erfindungsgemäßen Luftfahrzeugrumpfes sind Gegenstand der Unteransprüche 2 bis 9.

Vorzugsweise weist der jeweilige inelastisch verformbare Bereich von größerer Steifigkeit in vertikaler Richtung zumindest einen über die Querträger der unteren Fußbodenstruktur hinaus nach unten verlängerten Fußbodenlängsträger auf, der in seinem oberen Bereich mit den Querträgern der Fußbodenstruktur verbunden ist und der in seinem unteren Bereich mit den Spanten des Rumpfes verbunden ist. Diese Ausführungsform schafft eine integrierte Struktur, bei der der in dieser Form ausgebildete Fußbodenlängsträger Teil der Verformungsstruktur wird. Dieser Fußbodenlängsträger kann - ähnlich wie im Stand der Technik - als energieaufnehmendes Bauteil ausgestaltet sein und übernimmt einerseits die Längsträgerfunktion für die Fußbodenstruktur und andererseits die Funktion des Energieabsorbers im Falle eines Anpralls oder Aufpralls ("Crash"). Diese Doppelnutzung des Fußbodenlängsträgers reduziert gegenüber dem im Stand der Technik gesondert vorgesehenen Längsträger-Verformungselement das Gewicht, die Kosten und den Einbauaufwand.

In einer bevorzugten Ausführungsform ist der zwischen den beiden zweiten inelastisch verformbaren Bereichen gelegene erste inelastisch verformbare Bereich als impulsabsorbierendes Strukturbauteil ausgebildet. Dazu ist vorzugsweise auf der Innenseite der Rumpfhaut eine impulsabsorbierende Schicht vorgesehen, die insbesondere vorzugsweise wellenförmig ausgebildet ist. Statt der wellenförmigen Ausbildung ist jedoch jede Ausbildung in Form eines regelmäßigen Musters von Erhebungen oder Vertiefungen denkbar, wie es bereits in der
DE 10 2007 038 634 B3 offenbart ist. Die Anordnung eines derartigen impulsabsorbierenden Strukturbauteils im untersten Bereich des Luftfahrzeugrumpfes als eines von mehreren Crashelementen ist jedoch aus dieser Entgegenhaltung nicht vorbekannt und darin auch nicht nahegelegt.

Vorteilhaft ist es dabei, wenn in dem zwischen den beiden zweiten inelastisch verformbaren Bereichen gelegenen Rumpfabschnitt, der den ersten inelastisch verformbaren Bereich bildet, keine die untere Fußbodenstruktur gegen die Rumpfhaut oder die Spanten abstützenden Rumpflängsträger vorgesehen sind. Hierdurch wird eine besonders nachgiebige Struktur geringerer Steifigkeit im ersten Bereich der Verformungsstruktur, also im Bauch des Rumpfes, geschaffen, die den ersten Aufprall des Luftfahrzeugs auf dem Boden zumindest in einem gewissen Umfang oder auf dem Wasser besonders wirksam abfängt und dämpft. Die relative Positionierung und Fixierung der Rumpfspanten in Luftfahrzeuglängsrichtung zueinander wird bei dieser Version von den über die Fußbodenquerträger mit den Rumpfspanten verbundenen außenseitigen Fußbodenlängsträgern übernommen.

Vorzugsweise ist die Stützstruktur bogenförmig zur Luftfahrzeugmitte hin einwärts gewölbt und ist zumindest in ihrem mittleren Abschnitt mit dem zugeordneten Querträger der unteren Fußbodenstruktur verbunden. Auf diese Weise wird eine besonders wirksame Querkraftübertragung über die Einheit aus Fußbodenquerträger und bogenförmiger Stützstruktur geschaffen.

Die Stützstruktur weist dabei vorzugsweise ein Fachwerk oder einen bogenförmigen Träger auf.

Vorteilhaft ist es auch, wenn die nach unten verlängerten außenseitigen Fußbodenlängsträger, die Fußbodenquerträger der unteren Fußbodenstruktur und die Spanten gemeinsam mit der in diesem Bereich mit den Spanten verbundenen Beplankung des Rumpfes und gegebenenfalls mit in diesem Bereich vorgesehenen und mit der unteren Fußbodenstruktur verbundenen Fußbodenplatten ein biegesteifes und verwindungssteifes Kastenprofil bilden. Ein derartiges Kastenprofil ist besonders gut geeignet, kinetische Energie in Verformungsarbeit umzusetzen, wenn das Luftfahrzeug auf einem harten Untergrund aufprallt, ohne dass dabei die gesamte Statik der Rumpfstruktur aufgelöst wird.

Eine besonders vorteilhafte Ausführungsform zeichnet sich dadurch aus, dass zur Verbindung der Querträger der unteren Fußbodenstruktur mit den Spanten Beschläge vorgesehen sind, die jeweils einerseits an einem seitlichen Ende eines Querträgers und andererseits am zugeordneten Spant befestigt sind. Das Vorsehen wirksame Querkraftübertragung über die Einheit aus Fußbodenquerträger und bogenförmiger Stützstruktur geschaffen.

Die Stützstruktur weist dabei vorzugsweise ein Fachwerk oder einen bogenförmigen Träger auf.

Vorteilhaft ist es auch, wenn die nach unten verlängerten außenseitigen Fußbodenlängsträger, die Fußbodenquerträger der unteren Fußbodenstruktur und die Spanten gemeinsam mit der in diesem Bereich mit den Spanten verbundenen Beplankung des Rumpfes und gegebenenfalls mit in diesem Bereich vorgesehenen und mit der unteren Fußbodenstruktur verbundenen Fußbodenplatten ein biegesteifes und verwindungssteifes Kastenprofil bilden. Ein derartiges Kastenprofil ist besonders gut geeignet, kinetische Energie in Verformungsarbeit umzusetzen, wenn das Luftfahrzeug auf einem harten Untergrund aufprallt, ohne dass dabei die gesamte Statik der Rumpfstruktur aufgelöst wird.

Eine besonders vorteilhafte Ausführungsform zeichnet sich dadurch aus, dass zur Verbindung der Querträger der unteren Fußbodenstruktur mit den Spanten Beschläge vorgesehen sind, die jeweils einerseits an einem seitlichen Ende eines Querträgers und andererseits am zugeordneten Spant befestigt sind. Das Vorsehen dieser Beschläge schafft eine besonders zuverlässige Kraftübertragung zwischen dem jeweiligen Rumpfspant und dem diesem zugeordneten Querträger der unteren Fußbodenstruktur.

Besonders vorteilhaft ist dabei, wenn die Beschläge jeweils mit fachwerkartig angeordneten Rippen versehen sind, die in Richtung der Kraftkomponenten der vom Beschlag zu übertragenden Kräfte verlaufen. Die Rippen nehmen dabei dann den größten Teil der zu übertragenden Kräfte auf, so dass der flächige Teil des Beschlags, der mit dem jeweiligen Querträger beziehungsweise dem jeweiligen Spant verbunden ist, wesentlich dünner als herkömmliche Beschläge ausgebildet werden kann. Auf diese Weise kann eine Gewichtsersparnis in den Beschlägen erzielt werden. Alternativ kann - ohne Gewichtsersparnis - ein kostengünstigeres Material (zum Beispiel Stahl statt Titan) verwendet werden, wodurch die Herstellungskosten deutlich gesenkt werden. Diese mit Rippen versehenen Beschläge können maßgeschneidert für den jeweiligen Anwendungsfall ausgestaltet sein, um so eine maximale Kraftübertragung bei minimaler Masse des Beschlags zu erzielen. Diese speziell ausgebildeten Beschläge stellen eine eigenständige Erfindung dar und können unabhängig von der Anwendung im vorliegenden Luftfahrzeugrumpf mit einer integrierten Energie aufnehmenden Verformungsstruktur zum Beispiel in jedem anderen Luftfahrzeugrumpf angewendet werden, um beispielsweise Spanten und Fußbodenquerträger miteinander zu verbinden.

Insofern erstreckt sich die vorliegende Erfindung auch auf einen Beschlag mit fachwerkartig angeordneten Rippen, die in Richtung der Kraftkomponenten der vom Beschlag zu übertragenden Kräfte verlaufen. Dabei können die Rippen in ihrer Längserstreckung beispielsweise in Richtungen ausgerichtet sein, die bei einer Kräftezerlegung mittels eines Kräfteparallelogramms oder mittels finiter Elemente als Hauptkraftübertragungsrichtungen ermittelt werden. Die Höhe und/oder Dicke der jeweiligen Rippen kann dann analog zur Größe der einzelnen Kraftkomponenten ausgestaltet sein. Der Beschlag ist vorzugsweise einstückig ausgebildet, beispielsweise als Gussteil, Pressteil oder als Schmiedeteil und kann zwischen den Rippen integrierte Flächenabschnitte aufweisen, die beispielsweise zur Befestigung des Beschlages dienen, indem sie beispielsweise mit Durchgangslöchern für Schrauben, Niete oder anderen Befestigungsbolzen versehen sind.

Derartige mit Rippen versehene Beschläge besitzen im Fall eines Anpralls oder Aufpralls zudem den Vorteil, dass sich auch die Beschläge verformen können und dadurch kinetische Energie in Verformungsarbeit umsetzen, was bei den bislang verwendeten massiven Beschlägen nicht oder zumindest nicht in einem nennenswerten Umfang möglich ist.

Der auf das Luftfahrzeug gerichtete Teil der Aufgabe wird durch die im Anspruch 10 angegebenen Merkmale gelöst. Insbesondere findet der erfindungsgemäße Rumpf Anwendung in einem Tragflächen-Luftfahrzeug oder in einem Drehflügler.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine perspektivische geschnittene Darstellung eines unteren Rumpfsegments eines erfindungsgemäßen Luftfahrzeugrumpfs;
- Fig. 2: eine geschnittene Darstellung des in Fig. 1 gezeigten Rumpfsegments in Richtung des Pfeils II;
- Fig. 3: eine vergrößerte Darstellung des Ausschnitts III in Fig. 2;
- Fig. 4: die Schnittdarstellung gemäß Fig. 2 mit einer zusätzlichen mittleren Stütze;
- Fig. 5: eine alternative Ausführungsform zu der in Fig. 2 dargestellten Ausführungsform mit bogenförmigem Fachwerkträger;
- Fig. 6: die Ausführungsform der Fig. 5 mit zusätzlicher mittlerer Stütze;
- Fig. 7: einen Schnitt durch die Ausführungsform der Fig. 2 nach einer Notwasserung;
- Fig. 8: die Ausführungsform gemäß Fig. 2 nach einem Aufschlag oder Aufprall, zum Beispiel bei einer Notlandung, auf hartem Untergrund;
- Fig. 9: eine weitere alternative Ausführungsform des erfindungsgemäßen Rumpfes bei einem Großraum-Frachtluftfahrzeug; und
- Fig. 10: eine weitere alternative Ausführungsform des erfindungsgemäßen Luftfahrzeugrumpfes für einen Helikopter.

### DARSTELLUNG VON BEVORZUGTEN AUSFÜHRUNGSBEISPIELEN

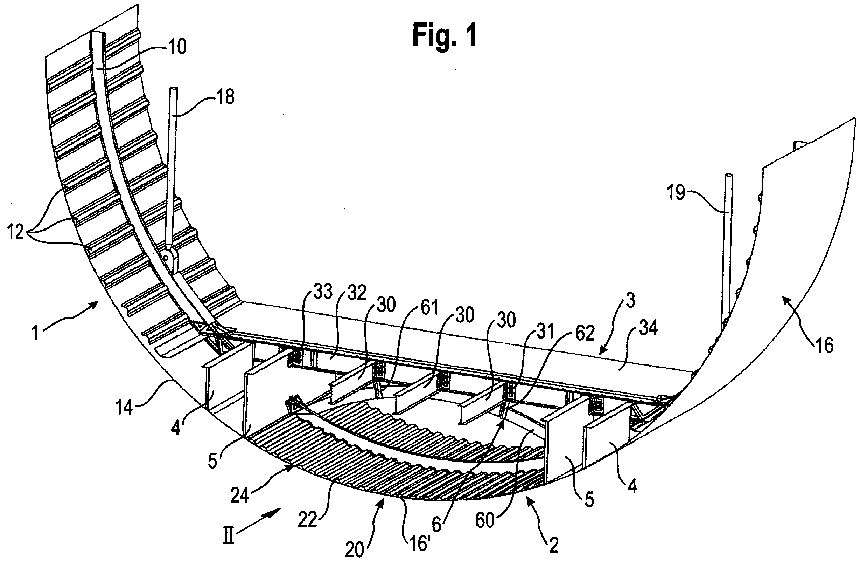

In Fig. 1 ist die untere Hälfte eines Rumpfsegments eines Luftfahrzeugrumpfes 1 gezeigt, welcher gemäß der Erfindung mit einer Verformungsstruktur 2 in seinem untersten Bereich, dem Bauch des Luftfahrzeugs, versehen ist. Der Rumpf weist eine Mehrzahl derartiger Rumpfelemente mit ringförmigen Spanten 10 auf, von denen in dem in Fig. 1 dargestellten Rumpfsegment nur einer gezeigt ist. Die Spanten 10 sind in herkömmlicher Weise in Längsrichtung des Luftfahrzeugs hintereinander und voneinander beabstandet angeordnet. Rumpflängsträger 12 verlaufen in Längsrichtung des Luftfahrzeugs und verbinden die einzelnen Spanten miteinander. Eine Vielzahl von Rumpflängsträgern 12 sind entlang des Umfangs des Rumpfes voneinander beabstandet angeordnet. Eine außen auf den Spanten 10 und den Rumpflängsträgern 12 befestigte Beplankung 14 bildet eine Rumpfhaut 16.

Im unteren Bereich des Rumpfinnenraums ist eine untere Fußbodenstruktur 3 vorgesehen. Die untere Fußbodenstruktur 3 umfasst eine Mehrzahl von Längsträgern 4, 5, 30 sowie mit diesen verbundene Querträger 32. Jeder Querträger 32 ist an seinen Enden mit einem zugeordneten Rumpfspant 10 verbunden. Auf der aus Querträgern 32 und Längsträgern 4, 5, 30 gebildeten Fußbodenstruktur sind Fußbodenplatten 34 angebracht, die den Fußboden eines unteren Raumes im Rumpf des Luftfahrzeugs bilden. Die Fußbodenstruktur 3 ist mit zwei unterschiedlichen Arten von Längsträgern versehen. Die mittleren Fußbodenlängsträger 30 sind in herkömmlicher Weise ausgebildet und weisen eine Höhe auf, die in etwa der Höhe der Querträger 32 entspricht. Die Befestigung der Längsträger 30 an den Querträgern 32 erfolgt mittels an sich bekannter Befestigungswinkel 31, die sowohl an den Längsträgern 30, als auch an den Querträgern 32 mittels Bolzenverbindungen, beispielsweise mittels Nieten, befestigt sind.

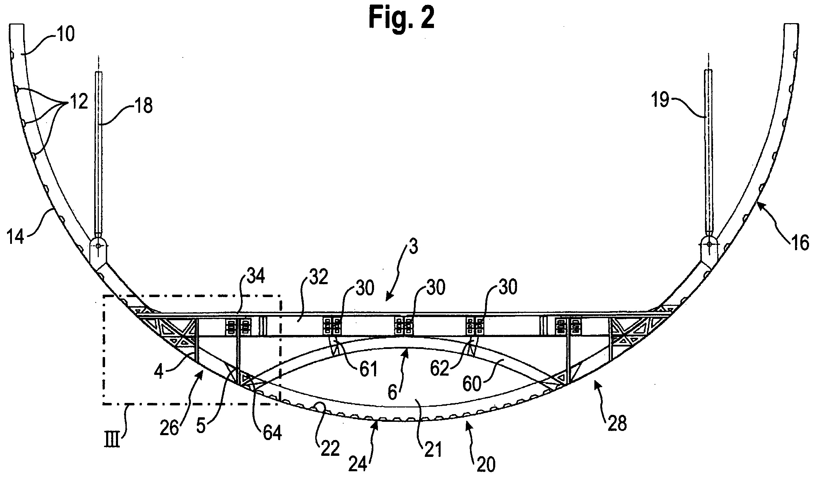

Die seitlichen Fußbodenlängsträger 4, 5 sind auf die gleiche Weise mittels Befestigungswinkeln 33 mit den jeweiligen Querträgern 32 verbunden. In Vertikalrichtung, also in Richtung der Luftfahrzeughochachse, erstrecken sich die seitlichen Längsträger 4, 5 jedoch nach unten bis zur Innenseite der Rumpfhaut 16. Aufbau und Wirkungsweise der seitlichen Fußbodenlängsträger 4, 5 im Falle eines Aufpralls bei einer Notlandung oder Notwasserung werden weiter unten unter Bezugnahme auf Fig. 2 näher beschrieben.

Zwischen den beiden inneren nach unten verlängerten Fußbogenlängsträgern 5 ist ein erster inelastisch verformbarer mittlerer Bereich 20 der Verformungsstruktur 2 ausgebildet. In diesem mittleren Bereich 20 ist ein Rumpfhautabschnitt 16' der Rumpfhaut 16 des Luftfahrzeugs auf der zur Rumpfmitte weisenden Innenseite mit einer impulsabsorbierenden Schicht 22 versehen, die ein regelmäßiges Muster von Erhebungen und Vertiefungen aufweist und im gezeigten Beispiel die Form eines Wellenprofils besitzt, bei welchem sich Wellentäler und Wellenberge in Luftfahrzeuglängsrichtung erstrecken. Dieser mittlere Rumpfhautabschnitt 16' bildet zusammen mit der auf der Innenseite angebrachten impulsabsorbierenden Schicht 22 ein impulsabsorbierendes Strukturteil 24, das sich jeweils zwischen zwei benachbarten Spanten 10 in Luftfahrzeuglängsrichtung erstreckt. Die Spanten 10 halten die Rumpfhaut in diesem Bereich in Form und gewährleisten die gewünschte Außenkontur des Rumpfes. Da sich das Wellenprofil in Luftfahrzeuglängsrichtung erstreckt, kann in diesem ersten inelastisch verformbaren mittleren Bereich 20 auf zusätzliche Rumpflängsträger 12 verzichtet werden, so dass in dem zwischen den beiden inneren nach unten verlängerten Fußbodenlängsträgern 5 gelegenen Rumpfabschnitt, der den ersten inelastisch verformbaren Bereich 20 bildet, keine die untere Fußbodenstruktur 3 gegen die Rumpfhaut 16 oder die Spanten 10 abstützenden Rumpflängsträger vorgesehen sind.

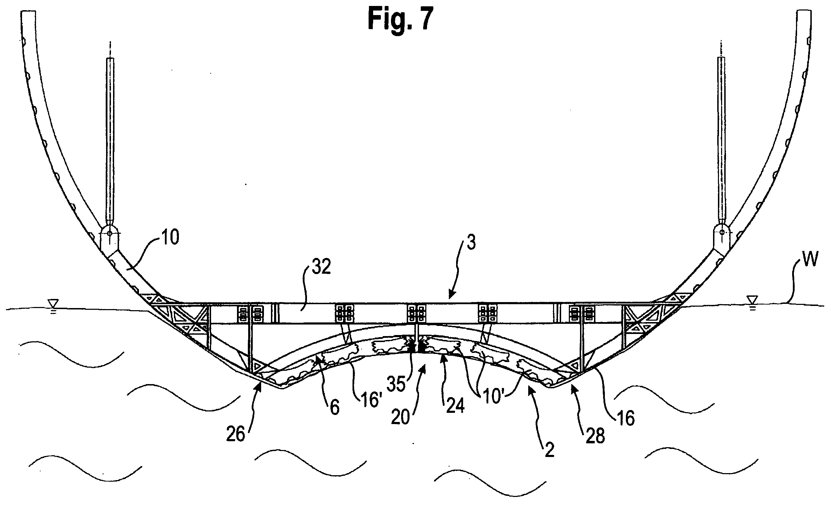

Zwischen dem linken und dem rechten inneren nach unten verlängerten Fußbodenlängsträger 5 ist einem jeden Spant 10 zugeordnet eine in Luftfahrzeugquerrichtung verlaufende bogenförmige Stützstruktur 6 vorgesehen. Diese bogenförmige Stützstruktur 6 verbindet die jeweiligen unteren, mit dem Spant 10 verbundenen Bereiche der inneren nach unten verlängerten Fußbodenlängsträger 5 und ist in diesem Bereich mit dem Spant 10 und dem Fußbodenlängsträger 5 über entsprechende Beschläge 64 verbunden. Die bogenförmige Stützstruktur 6 weist einen zur Luftfahrzeugmitte hin einwärts gewölbten bogenfömigen Träger 60 auf, der mit seinem mittleren Abschnitt den Querträger 32 der Fußbodenstruktur 3 berührt und hier im Bereich des mittleren Fußbodenlängsträgers mit dem Querträger 32 verbunden ist. Stützen 61, 62 verbinden den bogenförmigen Träger 60 mit den beiden links und rechts vom mittleren Fußbodenlängsträger verlaufenden benachbarten Fußbodenlängsträgern im Bereich von deren Verbindung mit dem Querträger 32. Auf diese Weise ist zwischen dem Spant 10 und der bogenförmigen Stützstruktur 6 im mittleren Bereich des unteren Rumpfabschnitts zwischen den beiden inneren nach unten verlängerten Fußbodenlängsträgern 5 ein freier Hohlraum 21 gebildet, in welchen der als impulsabsorbierendes Strukturbauteil 24 ausgebildete Rumpfabschnitt des ersten inelastisch verformbaren Bereichs 20 bei einer Bauchlandung hindernisfrei hineinkollabieren kann, wie es beispielsweise in Fig. 7 gezeigt ist.

In Fig. 2 ist der untere Teil des in Fig. 1 gezeigten Rumpfsegments im Querschnitt dargestellt. Links und rechts oberhalb der Anbindung der unteren Fußbodenstruktur 3 an den Rumpfspant 10 sind linke und rechte Vertikalstützen 18, 19 einer (nicht gezeigten) oberen Fußbodenstruktur gezeigt.

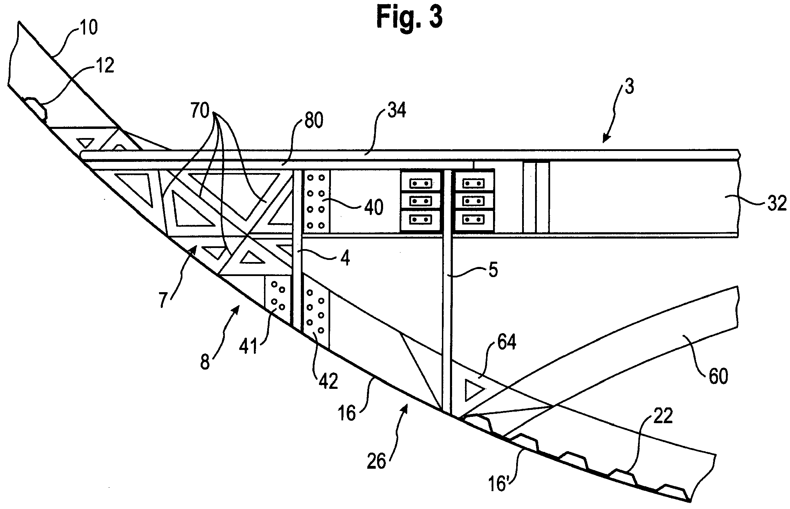

Links und rechts vom ersten inelastisch verformbaren mittleren Bereich 20 sind im Bereich der beiden nach unten verlängerten Fußbodenlängsträger 4, 5 zwei seitliche zweite inelastisch verformbare Bereiche 26, 28 ausgebildet, deren Aufbau und Wirkungsweise anhand des zweiten inelastisch verformbaren Bereichs 26 unter Bezugnahme auf Fig. 3 näher erläutert wird. Der andere seitliche inelastisch verformbare Bereich 28 ist spiegelbildlich dazu aufgebaut und wird daher nicht näher beschrieben.

Ein äußerer Fußbodenlängsträger 4 ist in unmittelbare Nähe des stirnseitigen Endes des Fußbodenquerträgers 32 der unteren Fußbodenstruktur 3 mittels herkömmlicher Befestigungswinkel 40 angebracht und erstreckt sich vom Querträger 32 bis nach unten zur Innenseite der Rumpfhaut 16, wo er auf an sich bekannte Weise mit der Rumpfhaut 16, beispielsweise mittels Nieten, verbunden ist. Der seitliche Fußbodenlängsträger 4 ist ebenfalls mit dem Spant 10 auf herkömmliche Weise, beispielsweise mittels geeigneter Befestigungswinkel 41, 42 verbunden, zum Beispiel vernietet.

Am stirnseitigen Ende des Querträgers 32 ist ein mit fachwerkartig angeordneten Rippen 70 versehener Beschlag 7 angebracht, der mit dem Querträger 32, dem äußeren Fußbodenlängsträger 4 und dem Spant 10 auf herkömmliche Weise fest verbunden, beispielsweise vernietet, ist. Die Rippen 70 des Beschlags 7 verlaufen dabei als Erhebungen auf einer flächigen Beschlagbasis in Richtung der Kraftkomponenten, die vom Beschlag 7 zwischen dem Querträger 32 und dem Spant 10 zu übertragen sind, wodurch der Beschlag 7 eine hohe Belastbarkeit in den erforderlichen Kraftrichtungen mit einem geringen Gewicht verbindet. Zwischen zwei benachbarten Fußbodenquerträgern 32 ist jeweils eine Deckplatte 80 vorgesehen, die mit dem Querträger 32, den beiden seitlichen nach unten verlängerten Fußbodenlängsträgern 4, 5 und dem Beschlag 7 auf herkömmliche Weise, beispielsweise mittels geeigneter Winkel und Nietbefestigungen verbunden ist. Die Querträger 32, die Deckplatten 80, die Spante 10, die Fußbodenlängsträger 4 und 5 sowie die Rumpfhaut 16 bilden auf diese Weise ein stabiles Kastenprofil 8, das seinerseits den zweiten inelastisch verformbaren Bereich 26 bildet.

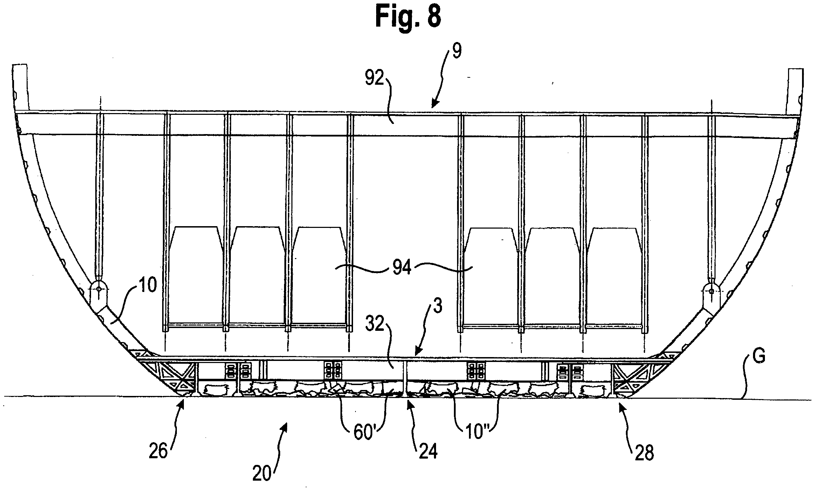

Insbesondere die von den seitlichen Fußbodenlängsträgern 4, 5 gebildeten vertikalen Stützen verleihen dem jeweiligen seitlichen inelastisch verformbaren Bereich 26, 28 eine höhere Festigkeit (Steifigkeit) in Vertikalrichtung, also in Richtung der Luftfahrzeughochachse, als sie der mittlere inelastisch verformbare Bereich 20 besitzt. Aus diesem Grund wird bei einer Bauchlandung zunächst der mittlere inelastisch verformbare Bereich 20 eingedrückt, wie in Fig. 7 dargestellt ist, bevor dann im Falle eines härteren Aufschlags des Luftfahrzeugs auf einen festen Untergrund die seitlichen inelastisch verformbaren Bereiche 26, 28 Energie aufnehmen und in Verformungsarbeit umsetzen, wie beispielsweise in Fig. 8 gezeigt ist.

Das für die verformbaren Bereiche 20, 26, 28 verwendete Material ist speziell auf die Aufgabe, maximal Energie aufzunehmen und in Verformungsarbeit umzusetzen, abgestimmt. So besteht beispielsweise die impulsabsorbierende Schicht 22 aus einem Faserverbundmaterial, vorzugsweise aus Kohlefaser-Verbundwerkstoff (CFK), aus einem Gemisch aus Glasfaser und CFK oder nur aus Glasfaser-Verbundwerkstoff. Das dabei verwendete Glasfasermaterial weist eine hohe Bruchdehnung von mehr als 5 % auf, um möglichst viel Energie in Verformungsarbeit umsetzen zu können.

Der mittlere Rumpfhautabschnitt 16' im mittleren inelastisch verformbaren Bereich 20 und vorzugsweise auch in den beiden seitlichen inelastisch verformbaren Bereichen 26, 28 kann aus Leichtmetall, einem Metall-Faser-Verbundwerkstoff, aus CFK oder aus einer Mischung aus CFK mit Glasfaseranteil bestehen, wobei auch hier Glasfasern mit einer Bruchdehnung von mehr als 5 % verwendet werden.

Die beiden nach unten verlängerten seitlichen Fußbodenlängsträger 4, 5 können aus Leichtmetall, zum Beispiel Aluminium, oder einem Metall-FaserVerbundwerkstoff, aus CFK oder aus CFK mit einem Glasfaseranteil bestehen. Auch hier werden Glasfasern mit einer Bruchdehnung von mehr als 5 % bevorzugt verwendet.

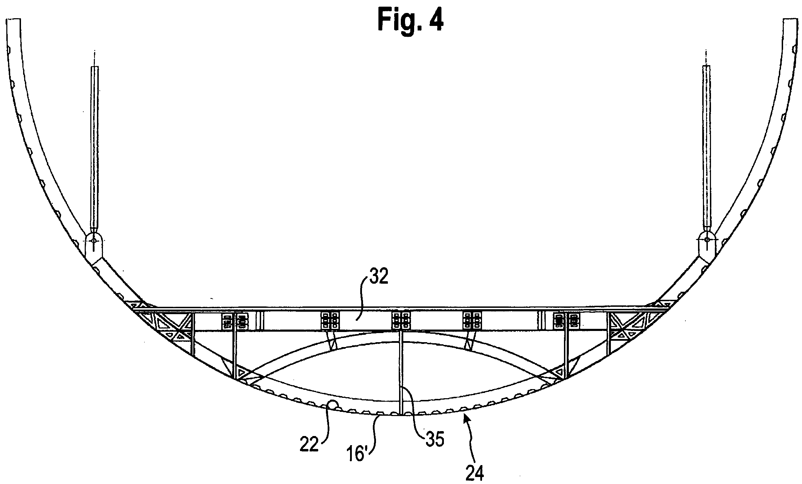

Fig. 4 zeigt eine zur Fig. 2 alternative Ausführungsform, bei der eine weiche mittlere Vertikalstrebe 35 vorgesehen ist, die sich zwischen dem Fußbodenquerträger 32 und dem vom mittleren Rumpfhautabschnitt 16' und der impulsabsorbierenden Schicht 22 gebildeten impulsabsorbierenden Strukturbauteil 24 erstreckt und für zusätzliche Stabilisierung sorgt. Die Vertikalstrebe 35 ist jedoch derart nachgiebig ausgebildet, dass sie zwar diese Stabilisierungsaufgaben übernehmen kann, aber im Fall einer Bruchlandung das bereits beschriebene Eindrücken des impulsabsorbierenden Strukturbauteils 24 nicht behindert und insbesondere kein Einreißen des mittleren Rumpfhautabschnitts 16' verursacht. Die Vertikalstrebe 35 kann als vertikal oder schräg zur Luftfahrzeuglängsachse verlaufende stangenartige Strebe ausgebildet sein oder sie kann als nachgiebiges flächiges Bauteil gestaltet sein, welches sich in einer vertikalen Ebene in Luftfahrzeuglängsrichtung erstreckt.

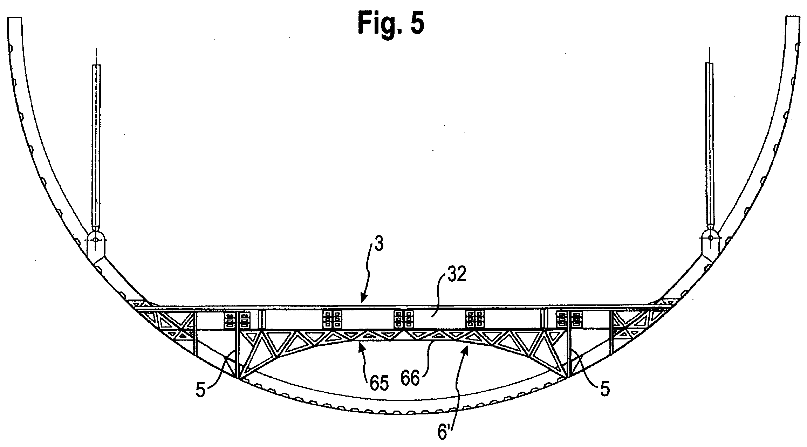

In Fig. 5 ist eine alternative Ausführungsform zu der in Fig. 2 gezeigten Ausführungsform dargestellt, bei welcher die bogenförmige Stützstruktur 6' nicht durch einen bogenförmigen Träger wie im Beispiel der Fig. 2, sondern durch ein Fachwerk 65 gebildet ist, welches an seiner Oberseite über die gesamte Breite zwischen den beiden inneren vertikalen Fußbodenlängsträgern 5 mit dem Fußbodenquerträger 32 der unteren Fußbodenstruktur 3 verbunden ist und dessen unterer Fachwerkszug 66 bogenförmig ausgestaltet ist.

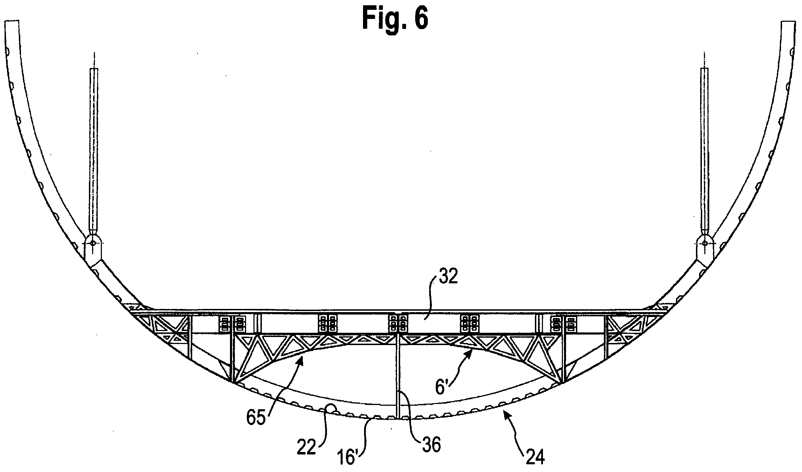

Fig. 6 zeigt eine abgewandelte Ausführungsform zu der in Fig. 5 gezeigten Variante mit einer vom Fachwerk 65 gebildeten bogenförmigen Stützstruktur 6', bei der, wie im Beispiel der Fig. 4, eine nachgiebige mittlere Vertikalstrebe 36 vorgesehen ist, die sich zwischen dem Fußbodenquerträger 32 und dem vom mittleren Rumpfhautabschnitt 16' und der impulsabsorbierenden Schicht 22 gebildeten impulsabsorbierenden Strukturbauteil 24 erstreckt und für zusätzliche Stabilisierung sorgt. Die Vertikalstrebe 36 entspricht in ihren Eigenschaften und in ihrer Ausgestaltung der Vertikalstrebe 35; sie kann somit als stangenartige Strebe oder als flächiges Bauteil ausgestaltet sein.

Fig. 7 zeigt die Ausführungsform gemäß Fig. 4 nach einer Notwasserung. Es ist zu erkennen, dass der erste inelastisch verformbare mittlere Bereich 20 der Verformungsstruktur 2 durch den Aufprall des Luftfahrzeugs auf die Wasseroberfläche W in den Hohlraum 21 hineinkollabiert ist. Der untere mittlere Rumpfhautabschnitt 16' wurde dabei nach innen zur Luftfahrzeugmitte hin eingedrückt, ist aber nicht aufgerissen, so dass kein Leck in der Rumpfhaut 16 entstanden ist. Die Vertikalstrebe 35 ist, wie in Fig. 7 gut zu erkennen ist, kollabiert und steht dem Eindrücken des impulsabsorbierenden Strukturbauteils 24 nicht im Weg. Der Spant 10 ist im Bereich des mittleren inelastisch verformbaren Bereichs 20 in Einzelteile 10' zerbrochen. Die Kraftübertragung zwischen den beiden abgebrochenen Enden des unbeschädigt verbliebenen Teils des Spants 10 erfolgt nunmehr über die bogenförmige Stützstruktur 6 und den Querträger 32 der unteren Fußbodenstruktur 3, so dass das statische Gerüst des Luftfahrzeugrumpfes nicht versagt. Selbst wenn in diesem Fall die äußere Beplankung 14 im unteren mittleren Rumpfhautabschnitt 16' einreißen sollte, so wird die impulsabsorbierende Schicht 22 nur verformt und gewährleistet die Dichtigkeit der Rumpfhaut 16.

Die beiden seitlichen inelastisch verformbaren Bereiche 26, 28 sind durch den Aufprall des Luftfahrzeugs auf die Wasseroberfläche W nicht in Mitleidenschaft gezogen worden und bilden eine Art Kufen oder Schwimmer aus, die das Luftfahrzeug bei seiner Längsbewegung auf dem Wasser stabilisieren.

Fig. 8 zeigt einen erfindungsgemäßen Luftfahrzeugrumpf, der im Aufbau dem in Fig. 4 gezeigten Rumpf entspricht, nach einem Aufprall auf einen festen Untergrund G. In Fig. 8 ist auch zu erkennen, dass der Luftfahrzeugrumpf mit einer oberen Fußbodenstruktur 9 ausgestattet ist, die auf herkömmliche Weise mit (nicht gezeigten) Fußbodenlängsträgern und Fußbodenquerträgern 92 aufgebaut ist. In dem zwischen der unteren Fußbodenstruktur 3 und der oberen Fußbodenstruktur 9 gebildeten Unterdeck des Luftfahrzeugrumpfes sind Passagiersitze 94 vorgesehen.

Bei dem in Fig. 8 dargestellten Zustand des Luftfahrzeugrumpfes nach einem Bodenaufschprall ist nicht nur - wie bei der in Fig. 7 gezeigten Notwasserung - das mittlere impulsabsorbierende Strukturbauteil 24 des mittleren inelastisch verformbaren Bereichs 20 in den Hohlraum 21 kollabiert, sondern auch die beiden seitlichen inelastisch verformbaren Bereiche 26, 28 haben Aufprallenergie aufgenommen und sind dadurch verformt worden. Nicht nur der Spant 10 hat sich bei diesem Bodenaufprall in dem Bereich zwischen den beiden fachwerkartigen Beschlägen 7 mit welchen der Querträger 32 der unteren Fußbodenstruktur 3 am Spant 10 befestigt ist, in seine Einzelteile 10" zerlegt, sondern auch der bogenförmige Träger 60 ist in Einzelteile 60' zerbrochen. Die statische Stabilität des Rumpfes in Umfangsrichtung wird in diesem Fall noch durch den verbleibenden Bereich des Spants 10 und den unteren Fußbodenquerträger 32 sowie den oberen Fußbodenquerträger 92 aufrecht erhalten.

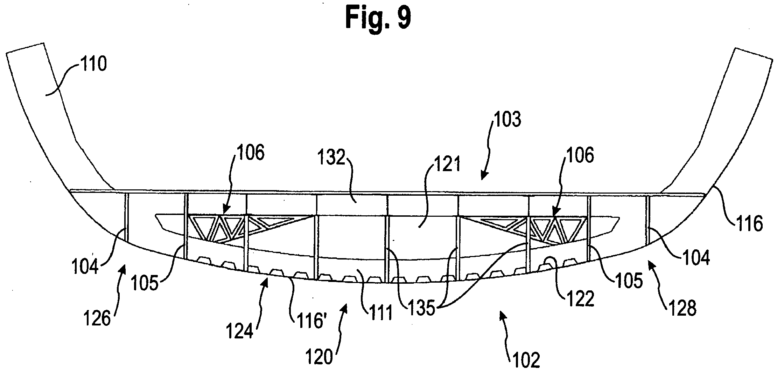

Fig. 9 zeigt in schematischer Darstellung den unteren Teil eines Rumpfsegments eines erfindungsgemäßen Luftfahrzeugrumpfes für beispielsweise ein Transportflugzeug in einer abgewandelten Ausführungsform. Der untere Fußbodenquerträger 132 sowie der untere Teil 111 des Spants 110 sind als integrales Strukturbauteil ausgebildet. Zusätzlich zu den beiden äußeren Fußbodenlängsträgern 104, 105 der unteren Fußbodenstruktur 103 sind eine Mehrzahl von vertikalen Längsträgern 135 vorgesehen, die den unteren Fußbodenquerträger 132 gegen den unteren Teil des Spants 110 und die Rumpfhaut 116 abstützen. Diese Längsträger 135 sind wesentlich nachgiebiger (weicher) ausgebildet als die seitlichen Fußbodenlängsträger 104 und 105, so dass die Längsträger 135 zwar die auf die untere Fußbodenstruktur 103 durch die geladene Last einwirkenden Kräfte abstützen können, im Fall einer Bruchlandung auf dem Wasser oder auf festem Untergrund jedoch zusammen mit der Verformungsstruktur 102 kollabieren.

Auch hier weist die Verformungsstruktur 102 einen mittleren inelastisch verformbaren Bereich 120 auf, der mit einem impulsabsorbierenden Strukturbauteil 124 versehen ist, welches ebenfalls eine auf der Innenseite des mittleren Rumpfabschnitts 116' vorgesehene impulsabsorbierende Schicht 122 aufweist, die wie in den vorherigen Beispielen ausgestaltet ist. Weiterhin umfasst die Verformungsstruktur 102 wie in den vorhergehenden Beispielen zwei seitliche inelastisch verformbare Bereiche 126, 128, die prinzipiell genauso aufgebaut sind wie dies in Verbindung mit den vorhergehenden Beispielen beschrieben worden ist und die insbesondere die sehr steifen seitlichen Fußbodenlängsträger 104, 105 der unteren Fußbodenstruktur 103 aufweisen.

Anstelle der bogenförmigen Stützstruktur sind in dem in Fig. 9 gezeigten Beispiel zwei seitliche Fachwerkträger 106 vorgesehen, die sich zwischen dem Fußbodenquerträger 132 und dem unteren Spantenabschnitt 111 erstrecken und an den Seiten dem inneren seitlichen Fußbodenlängsträger 105 benachbart angeordnet sind. Die beiden Fachwerkträger 106 verlaufen an ihrer Unterseite vom unteren Spantabschnitt 111 hinauf zum Fußbodenquerträger 132 und sind seitlich weit voneinander beabstandet, so dass zwischen dem unteren Spantabschnitt 111, dem unteren Fußbodenquerträger 132 und den beiden Fachwerkträgern 106 sowie den inneren seitlichen Fußbodenlängsträgern 105 ein Hohlraum 121 verbleibt, in den im Falle eines Aufpralls des Luftfahrzeugs auf eine Wasseroberfläche oder auf einen festen Untergrund das impulsabsorbierende Strukturbauteil 124 und der untere mittlere Spantabschnitt 111 hineinkollabieren können.

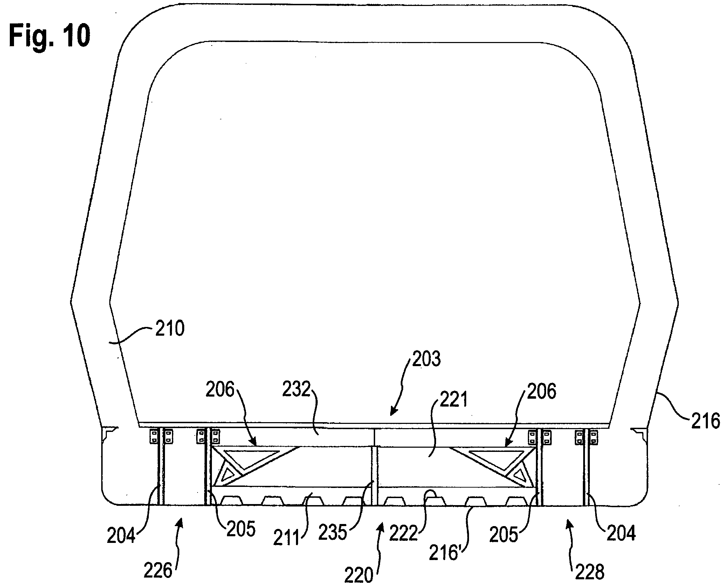

Fig. 10 zeigt eine abgewandelte Ausführungsform des in Fig. 9 dargestellten Rumpfsegments mit einer kastenförmigen Außenkontur, wie sie für Helikopter, insbesondere für Lasthelikopter, typisch ist. Auch hier bilden der Spant 210 mit seinem unteren mittleren Spantabschnitt 211 und dem Fußbodenquerträger 232 der unteren Fußbodenstruktur 203 ein integrales Profil mit einem zwischen dem unteren Fußbodenquerträger 232 und dem mittleren unteren Spantabschnitt 211 vorgesehenen Hohlraum 221 aus.

Die seitlichen Fußbodenlängsträger 204, 205 sind in gleicher Weise ausgebildet wie in den vorherigen Beispielen und bilden die Kernkomponenten der seitlichen inelastisch verformbaren Bereiche 226, 228. Der mittlere inelastisch verformbare Bereich 220 ist ebenfalls genauso aufgebaut wie in den vorherigen Beispielen und weist insbesondere ein impulsabsorbierendes Strukturbauteil 224 auf, welches eine auf der Innenseite des unteren mittleren Rumpfhautabschnitts 216' der Rumpfhaut 216 vorgesehene impulsabsorbierende Schicht 222 besitzt, die wie die impulsabsorbierende Schicht 22 der eingangs beschriebenen Beispiele ausgestaltet ist.

Auch im Beispiel der Fig. 10 sind zwei seitliche Fachwerkträger 206 vorgesehen, die sich zwischen dem unteren Fußbodenquerträger 232 und dem unteren Spantabschnitt 211 erstrecken und, jeweils der Innenseite des inneren Fußbodenlängsträgers 205 benachbart, weit voneinander beabstandet sind. Auch bei diesen beiden seitlichen Fachwerkträgern 206 verläuft der untere Trägerzug, wie bei den Fachwerkträgern 106 des Beispiels aus Fig. 9, zur Mitte hin schräg nach oben, so dass ein ausreichender Hohlraum 221 zur Verfügung steht, in welchen der mittlere inelastisch verformbare Bereich 220 hineinkollabieren kann.

Ein nachgiebiger mittlerer Längsträger 235 erstreckt sich vom Fußbodenquerträger 232 zum unteren Spantabschnitt 211 und zum unteren Rumpfhautabschnitt 216' und sorgt wie die zusätzlichen Längsträger 135 im Beispiel der Fig. 9 dafür, dass die auf der Fußbodenstruktur 203 gelagerte Last optimal in den Rumpfspant 210 abgestützt wird. Der zusätzliche mittlere Längsträger 235 ist jedoch so nachgiebig, dass er im Falle einer Bruchlandung dem Eindrücken des mittleren inelastisch verformbaren Bereichs 220 nach innen in den Hohlraum 221 keinen merklichen Widerstand entgegensetzt und insbesondere nicht ein Aufreißen des unteren Rumpfhautabschnitts 216' bewirkt.

Alle gezeigten Beispiele sind somit so ausgebildet, dass bei einer Notwasserung lediglich der mittlere inelastisch verformbare Bereich 20, 120, 220 in den dahinter gebildeten Hohlraum 21, 221, 221 eingedrückt wird, ohne dass dabei die Rumpfhaut beschädigt wird, also kein Leck in der Rumpfhaut auftritt. Erst bei einem stärkeren Aufprall, wie er bei einer Notlandung auf festem Untergrund auftritt, verformen sich auch die seitlichen inelastisch verformbaren Bereiche 26, 28; 126, 128; 226, 228, um die durch den gegenüber einer Wasseroberfläche weniger nachgiebigen festen Untergrund hervorgerufenen höheren Aufprallkräfte zu absorbieren. In diesem Fall des Aufpralls auf einen festen Untergrund steht das Kriterium der Dichtigkeit der Rumpfhaut nicht mehr im Vordergrund, so dass hier auch eine Zerstörung der Rumpfhaut zur Energieabsorption beiträgt.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Luftfahrzeugrumpf
- 2: Verformungsstruktur
- 3: untere Fußbodenstruktur
- 4: Längsträger
- 5: Längsträger
- 6: Stützstruktur
- 6': Stützstruktur
- 7: Beschlag
- 8: Kastenprofil
- 9: obere Fußbodenstruktur
- 10: Spant
- 10': Einzelteile des Spants 10
- 10": Einzelteile des Spants 10
- 12: Rumpflängsträger
- 14: Beplankung
- 16: Rumpfhaut
- 16': Rumpfhautabschnitt
- 18: Vertikalstütze
- 19: Vertikalstütze
- 20: mittlerer inelastisch verformbarer Bereich
- 21: Hohlraum
- 22: impulsabsorbierende Schicht
- 24: impulsabsorbierendes Strukturteil
- 26: seitlicher inelastisch verformbarer Bereich
- 28: seitlicher inelastisch verformbarer Bereich
- 30: Längsträger
- 31: Befestigungswinkel
- 32: Querträger
- 33: Befestigungswinkel
- 34: Fußbodenplatte
- 35: Vertikalstrebe
- 36: Vertikalstrebe
- 40: Befestigungswinkel
- 41: Befestigungswinkel
- 42: Befestigungswinkel
- 60: bogenförmiger Träger
- 60': Einzelteile des bogenförmigen Trägers
- 61: Stütze
- 62: Stütze
- 65: Fachwerk
- 66: Fachwerkszug
- 70: Rippe
- 80: Deckplatte
- 92: Fußbodenquerträger
- 94: Passagiersitze
- 102: Verformungsstruktur
- 103: Fußbodenstruktur
- 104: Fußbodenlängsträger
- 105: Fußbodenlängsträger
- 106: Fachwerkträger
- 110: Spant
- 111: unterer Spantenabschnitt
- 116: Rumpfhaut
- 116': mittlerer Rumpfhautabschnitt
- 120: mittlerer inelastisch verformbarer Bereich
- 121: Hohlraum
- 122: impulsabsorbierende Schicht
- 124: impulsabsorbierendes Strukturbauteil
- 126: seitlicher inelastisch verformbarer Bereich
- 128: seitlicher inelastisch verformbarer Bereich
- 132: Fußbodenquerträger
- 135: vertikale Längsträger
- 203: Fußbodenstruktur
- 204: Fußbodenlängsträger
- 205: Fußbodenlängsträger
- 206: seitlicher Fachwerkträger
- 210: Spant
- 211: unterer mittlerer Spantabschnitt
- 216: Rumpfhaut
- 216': unterer Rumpfhautabschnitt
- 220: mittlerer inelastisch verformbarer Bereich
- 221: Hohlraum
- 222: impulsabsorbierende Schicht
- 224: impulsabsorbierendes Strukturbauteil
- 226: seitlicher inelastisch verformbarer Bereich
- 228: seitlicher inelastisch verformbarer Bereich
- 232: Fußbodenquerträger
- 235: zusätzlicher mittlerer Längsträger

- G: fester Untergrund
- W: Wasseroberfläche

## Patentansprüche

1. Luftfahrzeugrumpf mit einer integrierten energieaufnehmenden Verformungsstruktur,
- wobei der Rumpf (1) ringförmige Spanten (10; 110; 210) und die Spanten (10; 110; 210) miteinander verbindende Rumpflängsträger (12) sowie eine eine Rumpfhaut (16; 116; 216) bildende Beplankung (14) aufweist,
- wobei im Inneren des Rumpfes (1) zumindest eine untere Fußbodenstruktur (3; 103; 203) vorgesehen ist, die eine Mehrzahl von mit einem zugeordneten Spant (10; 110; 210) verbundenen Querträgern (32; 132; 232) und diese miteinander verbindende Fußbodenlängsträger (4, 5, 30; 104, 105; 204, 205) aufweist und
- wobei die Verformungsstruktur in einem unterhalb der unteren Fußbodenstruktur (3; 103; 203) gelegenen unteren Rumpfbereich ausgebildet ist,
wobei,
- die Verformungsstruktur einen ersten inelastisch verformbaren mittleren Bereich (20; 120; 220) und jeweils einen zweiten, linksseitigen beziehungsweise rechtsseitigen, inelastisch verformbaren Bereich (26, 28; 126, 128; 226, 228) von größerer Steifigkeit in vertikaler Richtung als der mittlere Bereich aufweist, **dadurch gekennzeichnet,**
- **dass** zwischen dem linken inneren und dem rechten inneren nach unten verlängerten Fußbodenlängsträger (5), einem jeden Spant (10) zugeordnet, jeweils eine in Luftfahrzeugquerrichtung verlaufende Stützstruktur (6; 6') vorgesehen ist, die die jeweiligen unteren, mit dem zugeordneten Spant (10) verbundenen Bereiche der inneren, nach unten verlängerten Fußbodenlängsträger (5) zur Kraftübertragung in Querrichtung miteinander verbindet.

2. Luftfahrzeugrumpf nach Anspruch 1,
**dadurch gekennzeichnet,**
**dass** der jeweilige inelastisch verformbare Bereich (26, 28; 126, 128; 226, 228) von größerer Steifigkeit in vertikaler Richtung zumindest einen über die Querträger (32; 132; 232) der unteren Fußbodenstruktur (3; 103; 203) hinaus nach unten verlängerten Fußbodenlängsträger (4, 5; 104, 105; 204, 205) aufweist, der in seinem oberen Bereich mit den Querträgern (32; 132; 232) der Fußbodenstruktur (3; 103; 203) verbunden ist und der in seinem unteren Bereich mit den Spanten (10; 110; 210) des Rumpfes (1) verbunden ist.

3. Luftfahrzeugrumpf nach Anspruch 1 oder 2,
**dadurch gekennzeichnet,**
**dass** der zwischen den beiden zweiten inelastisch verformbaren Bereichen (26, 28; 126, 128; 226, 228) gelegene erste inelastisch verformbare Bereich (20; 120; 220) als impulsabsorbierendes Strukturbauteil ausgebildet ist, wozu vorzugsweise auf der Innenseite der Rumpfhaut (16; 116; 216) eine impulsabsorbierende Schicht (22; 122; 222) vorgesehen ist, die weiter vorzugsweise ein regelmäßiges Muster von Erhebungen und Vertiefungen aufweist, wozu sie beispielsweise wellenförmig ausgebildet ist.

4. Luftfahrzeugrumpf nach Anspruch 3,
**dadurch gekennzeichnet,**
**dass** in dem zwischen den beiden inelastisch verformbaren Bereichen (26, 28; 126, 128; 226, 228) gelegenen Rumpfabschnitt, der den ersten inelastisch verformbaren Bereich (20; 120; 220) bildet, keine die untere Fußbodenstruktur gegen die Rumpfhaut oder die Spanten abstützenden Rumpflängsträger vorgesehen sind.

5. Luftfahrzeugrumpf nach einem der vorhergehenden Ansprüche,
**dadurch gekennzeichnet,**
**dass** die in Luftfahrzeugquerrichtung verlaufende Stützstruktur (6; 6') bogenförmig zur Luftfahrzeugmitte hin einwärts gewölbt ist und zumindest in ihrem mittleren Abschnitt mit dem zugeordneten Querträger (32) der unteren Fußbodenstruktur (3) verbunden ist.

6. Luftfahrzeugrumpf nach Anspruch 5,
**dadurch gekennzeichnet,**
**dass** die Stützstruktur (6; 6') ein Fachwerk (65) oder einen bogenförmigen Träger (60) aufweist.

7. Luftfahrzeugrumpf nach einem der Ansprüche 2 bis 6,
**dadurch gekennzeichnet,**
**dass** die nach unten verlängerten Fußbodenlängsträger (4, 5) die Querträger (32) der unteren Fußbodenstruktur (3) und die Spanten (10) gemeinsam mit der in diesem Bereich mit den Spanten (10) verbundenen Beplankung (14) des Rumpfes (1) und gegebenenfalls mit in diesem Bereich vorgesehenen und mit der unteren Fußbodenstruktur (3) verbundenen Fußbodenplatten (34) ein biegesteifes und verwindungssteifes Kastenprofil (8) bilden.

8. Luftfahrzeugrumpf nach einem der vorhergehenden Ansprüche,
**dadurch gekennzeichnet,**
**dass** zur Verbindung der Querträger (32) der unteren Fußbodenstruktur (3) mit den Spanten (10) Beschläge (7) vorgesehen sind, die jeweils einerseits an einem seitlichen Ende eines Querträgers (32) und andererseits am zugeordneten Spant (10) befestigt sind.

9. Luftfahrzeugrumpf nach Anspruch 8,
**dadurch gekennzeichnet,**
**dass** die Beschläge (7) mit fachwerkartig angeordneten Rippen (70) versehen sind, die in Richtung der Kraftkomponenten der vom Beschlag (7) zu übertragenden Kräfte verlaufen.

10. Luftfahrzeug, insbesondere Tragflächen-Luftfahrzeug oder Drehflügler, mit einem Rumpf, der gemäß einem der vorhergehenden Ansprüche ausgebildet ist.

## Claims

1. Aircraft fuselage with an integrated energy-absorbing deformation structure,
- wherein the fuselage (1) has annular frames (10; 110; 210), stringers (12) connecting the frames (10; 110; 210) to one another, and a panelling (14) forming a fuselage skin (16; 116; 216),
- wherein, in the interior of the fuselage (1), there is provided at least one lower floor structure (3; 103; 203) that has a plurality of transverse beams (32; 132; 232) connected to an assigned frame (10; 110; 210) and floor longitudinal beams (4, 5, 30; 104, 105; 204, 205) connecting these transverse beams to one another, and
- wherein the deformation structure is formed in a lower fuselage region located beneath the lower floor structure (3; 103; 203),
wherein
- the deformation structure has a first inelastically deformable central region (20; 120; 220) and in each case one second, left-hand or right-hand inelastically deformable region (26, 28; 126, 128; 226, 228) having greater stiffness in the vertical direction than the central region,
**characterized**
- **in that**, between the left-hand inner and the right-hand inner downwards-extended floor longitudinal beam (5), there is provided a support structure (6; 6') which is assigned to each frame (10) and respectively runs in a transverse direction of the aircraft, and which connects to one another the respective lower regions, that are connected to the assigned frame (10), of the inner, downwards-extended floor longitudinal beams (5) for transmission of forces in the transverse direction.

2. Aircraft fuselage according to Claim 1,
**characterized**
**in that** the respective inelastically deformable region (26, 28; 126, 128; 226, 228) having greater stiffness in the vertical direction has at least one floor longitudinal beam (4, 5; 104, 105; 204, 205) which is extended downward beyond the transverse beams (32; 132; 232) of the lower floor structure (3; 103; 203), which is connected in its upper region to the transverse beams (32; 132; 232) of the floor structure (3; 103; 203), and which is connected in its lower region to the frames (10; 110; 210) of the fuselage (1).

3. Aircraft fuselage according to Claim 1 or 2,
**characterized**
**in that** the first inelastically deformable region (20; 120; 220) located between the two second inelastically deformable regions (26, 28; 126, 128; 226, 228) is designed as an impulse-absorbing structural component, to which end there is preferably provided, on the inside of the fuselage skin (16; 116; 216), an impulse-absorbing layer (22; 122; 222) which more preferably has a regular pattern of elevations and depressions, it being for example designed in the manner of a wave.

4. Aircraft fuselage according to Claim 3,
**characterized**
**in that**, in that fuselage section which is located between the two inelastically deformable regions (26, 28; 126, 128; 226, 228) and forms the first inelastically deformable region (20; 120; 220), there are provided no stringers that support the lower floor structure against the fuselage skin or the frames.

5. Aircraft fuselage according to one of the preceding claims,
**characterized**
**in that** the support structure (6; 6') running in the aircraft transverse direction is curved inwards in an arcuate manner towards the centre of the aircraft and is connected, at least in its central section, to the assigned transverse beam (32) of the lower floor structure (3).

6. Aircraft fuselage according to Claim 5,
**characterized**
**in that** the support structure (6; 6') has a truss structure (65) or an arcuate beam (60).

7. Aircraft fuselage according to one of Claims 2 to 6,
**characterized**
**in that** the downwards-extended floor longitudinal beams (4, 5), the transverse beams (32) of the lower floor structure (3) and the frames (10) form, together with the panelling (14) of the fuselage (1) connected to the frames (10) in this region and possibly with floor plates (34) provided in this region and connected to the lower floor structure (3), a box profile (8) which is resistant to bending and to twisting.

8. Aircraft fuselage according to one of the preceding claims,
**characterized**
**in that** there are provided, for connecting the transverse beams (32) of the lower floor structure (3) to the frames (10), braces (7) which are in each case attached on one hand to a lateral end of a transverse beam (32) and on the other hand to the assigned frame (10).

9. Aircraft fuselage according to Claim 8,
**characterized**
**in that** the braces (7) are provided with ribs (70) which are arranged in the manner of a truss structure and run in the direction of the force components of the forces to be transmitted by the brace (7).

10. Aircraft, in particular fixed-wing or rotary-wing aircraft, having a fuselage designed according to one of the preceding claims.

## Revendications

1. Fuselage d'aéronef comprenant une structure intégrée de déformation absorbant l'énergie,
- le fuselage (1) présentant des membrures de forme annulaire (10 ; 110 ; 210) et des longerons de fuselage (12) reliant entre elles les membrures (10 ; 110 ; 210) ainsi qu'un habillage (14) formant une peau de fuselage (16 ; 116 ; 216),
- à l'intérieur du fuselage (1) étant prévue au moins une structure de plancher inférieure (3 ; 103 ; 203) qui présente une pluralité de traverses (32 ; 132 ; 232) connectées à une membrure associée (10 ; 110 ; 210) et de longerons de plancher (4, 5, 30 ; 104, 105 ; 204, 205) reliant celles-ci les unes aux autres et
- la structure de déformation étant réalisée dans une région du fuselage inférieure située sous la structure de plancher inférieure (3 ; 103 ; 203),
- la structure de déformation présentant une première région centrale déformable de manière non élastique (20 ; 120 ; 220) et à chaque fois une deuxième région déformable de manière non élastique du côté gauche, respectivement du côté droit (26, 28 ; 126, 128 ; 226, 228) de plus grande rigidité dans la direction verticale que la région centrale,
**caractérisé en ce**
- **qu'**entre le longeron de plancher interne gauche et le longeron de plancher interne droit prolongé vers le bas (5), associé à chaque membrure (10), est à chaque fois prévue une structure de support (6 ; 6') s'étendant dans la direction transversale de l'aéronef, qui relie l'une à l'autre les régions inférieures respectives, connectées à la membrure associée (10), des longerons de plancher internes prolongés vers le bas (5) en vue du transfert de force dans la direction transversale.

2. Fuselage d'aéronef selon la revendication 1,
**caractérisé en ce que**
la région déformable de manière non élastique respective (26, 28 ; 126, 128 ; 226, 228), de plus grande rigidité dans la direction verticale, présente au moins un longeron de plancher (4, 5 ; 104, 105 ; 204, 205) prolongé vers le bas au-delà des traverses (32 ; 132 ; 232) de la structure de plancher inférieure (3 ; 103 ; 203), qui est connecté dans sa région supérieure aux traverses (32 ; 132 ; 232) de la structure de plancher (3 ; 103 ; 203) et qui est connecté dans sa région inférieure aux membrures (10 ; 110 ; 210) du fuselage (1).

3. Fuselage d'aéronef selon la revendication 1 ou 2,
**caractérisé en ce que**
la première région déformable de manière non élastique (20 ; 120 ; 220) placée entre les deux deuxièmes régions déformables de manière non élastique (26, 28 ; 126, 128 ; 226, 228) est réalisée sous forme de composant structurel absorbant les impulsions, ce pour quoi une couche absorbant les impulsions (22 ; 122 ; 222) est prévue de préférence du côté intérieur de la peau de fuselage (16 ; 116 ; 216), laquelle couche présente en outre de préférence un motif régulier de rehaussements et de renfoncements, ce pour quoi elle est réalisée par exemple sous forme ondulée.

4. Fuselage d'aéronef selon la revendication 3,
**caractérisé en ce que**
dans la portion du fuselage située entre les deux régions déformables de manière non élastique (26, 28 ; 126, 128 ; 226, 228), qui forme la première région déformable de manière non élastique (20 ; 120 ; 220), ne sont prévus aucuns longerons de fuselage supportant la structure de plancher inférieure contre la peau de fuselage ou les membrures.

5. Fuselage d'aéronef selon l'une quelconque des revendications précédentes,
**caractérisé en ce que**
la structure de support (6 ; 6') s'étendant dans la direction transversale de l'aéronef est cintrée vers le centre de l'aéronef vers l'intérieur en forme d'arc et est connectée au moins dans sa section centrale à la traverse associée (32) de la structure de plancher inférieure (3).

6. Fuselage d'aéronef selon la revendication 5,
**caractérisé en ce que**
la structure de support (6 ; 6') présente un treillis (65) ou un support en forme d'arc (60).

7. Fuselage d'aéronef selon l'une quelconque des revendications 2 à 6,
**caractérisé en ce que**
les longerons de plancher se prolongeant vers le bas (4, 5), les traverses (32) de la structure de plancher inférieure (3) et les membrures (10) conjointement avec l'habillage (14) du fuselage (1) connecté dans cette région aux membrures (10) et éventuellement avec des plaques de plancher (34) prévues dans cette région et connectées à la structure de plancher inférieure (3), forment un profil de caisson rigide en flexion et en gauchissement (8).

8. Fuselage d'aéronef selon l'une quelconque des revendications précédentes,
**caractérisé en ce que**
pour la connexion des traverses (32) de la structure de plancher inférieure (3) aux membrures (10), on prévoit des ferrures (7) qui sont fixées d'une part à une extrémité latérale d'une traverse (32) et d'autre part à la membrure (10) associée.

9. Fuselage d'aéronef selon la revendication 8,
**caractérisé en ce que**
les ferrures (7) sont pourvues de nervures (70) disposées en forme de treillis, qui s'étendent dans la direction des composantes de force des forces à transmettre par la ferrure (7).

10. Aéronef, en particulier aéronef à surfaces portantes ou giravion, comprenant un fuselage réalisé selon l'une quelconque des revendications précédentes.
